# EUROPÄISCHE PATENTSCHRIFT

(11) **EP 1 262 060 B1**
(45) Veröffentlichungstag und Bekanntmachung des Hinweises auf die Patenterteilung: **13.08.2003**
(21) Anmeldenummer: 00920463.7
(22) Anmeldetag: 01.03.2000
(51) Int. Cl.: H04N 3/15

(54) **Verfahren und Vorrichtung zum teilweisen Auslesen der Bilddaten eines Bildsensors**
Method and device for partially reading out image data of an image sensor
Procédé et dispositif d'extraction partielle de données d'image d'un capteur d'image

(43) Veröffentlichungstag der Anmeldung: 04.12.2002
(73) Patentinhaber: Fraunhofer-Gesellschaft zur Förderung der angewandten Forschung e.V., 80636 München (DE)
(72) Erfinder: SCHREY, Olaf, D-40878 Ratingen (DE); SCHANZ, Michael, D-60596 Frankfurt am Main (DE); BROCKHERDE, Werner, D-47259 Duisburg (DE); HOSTICKA, Bedrich, D-47058 Duisburg (DE)
(74) Vertreter: Schoppe, Fritz, Dipl.-Ing.
(86) Internationale Anmeldenummer: EP0001771
(87) Internationale Veröffentlichungsnummer: WO01065829

(56) Entgegenhaltungen:
- EP-A- 0 527 004
- EP-A- 0 809 395
- DE-A- 3 744 128
- US-A- 5 262 871
- US-A- 5 841 126

## Beschreibung

Die vorliegende Erfindung bezieht sich auf ein Verfahren und eine Vorrichtung zum Auslesen von Bilddaten eines Teilbereichs eines Bildes sowie auf einen Bildsensor, der eine solche Vorrichtung umfaßt. Genauer gesagt betrifft die vorliegende Erfindung ein Verfahren und eine Vorrichtung zum Auslesen von Bilddaten eines Teilbereichs eines Bildes, welches durch einen Bildsensor bestehend aus einer Mehrzahl von Bildsensorelementen erfaßt wird, die durch ein Aktivierungssignal, das gemäß einem vorbestimmten Taktsignal sequentiell an die Bildsensorelemente anlegbar ist, auslesbar sind.

Moderne Industrie- und Verbraucher-Bilderfassungssysteme erfordern immer speziellere, auf die jeweilige Anwendung zugeschnittene Bildaufnahmealgorithmen und Bildverarbeitungsalgorithmen, wobei es in einigen Fällen wünschenswert ist, Teilregionen innerhalb eines Bildes mit mehrfacher Geschwindigkeit als der üblichen Bildrate auszulesen. Anwendungsbeispiele hierfür sind:
- Inspektions- und Anordnungs-Systeme, die nach einer Initialisierungs- und Ausrichtungs-Phase nur noch Teilregionen des Gesamtbildes auslesen und weiter verarbeiten müssen,
- Überwachungsaufgaben in automotiven Systemen, z. B. Kfz-Innenraumerkennung, Diebstahlsicherungs- und Fahrbahnerkennungs-Systeme, und
- Hochgeschwindigkeits-, Objektverfolgungs- und Zielverfolgungs-Systeme.

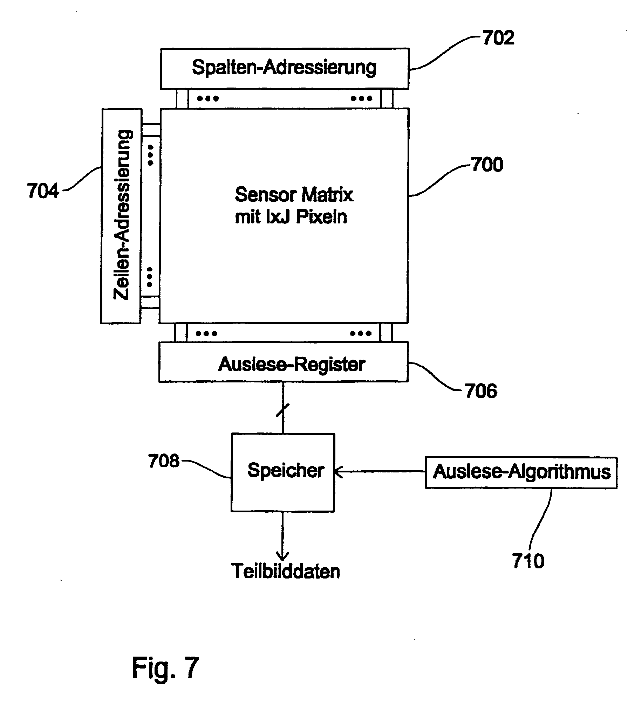

Ein herkömmliches System welches das Auslesen einer Teilregion eines Bildes ermöglicht, ist anhand der Fig. 7 dargestellt. Dieses System umfaßt eine Bildsensormatrix 700, die eine Mehrzahl von Bildsensorelementen umfaßt, die in Zeilen und Spalten angeordnet sind, und Bildelemente (Pixel) definieren. Die in Fig. 7 gezeigte Sensoranordnung umfaßt eine Sensormatrix bestehend aus I-Zeilen und J-Spalten, I, J ≥ 1. Über entsprechende Adressierungselemente 702 und 704 werden beispielsweise durch das Anlegen eines Aktivierungssignals, welches für die Spalten bzw. Zeilen gemäß einem Taktsignal sequentiell an die einzelnen Bildsensorsignale angelegt wird, der gesamte Sensorinhalt in das Ausleseregister 706 und von dort in einen Speicher 708 geschoben. Mittels eines Auslesealgorithmus 710 werden dann aus dem Gesamtbild, welches im Speicher 708 abgelegt ist, die erwünschten Teilbilddaten zur nachfolgenden Erzeugung des Teilbildes ausgelesen.

Bei den oben genannten Anwendungsgebieten besteht ein großer Bedarf an rekonfigurierbaren Bildverarbeitungssystemen, die die Bandbreite des Bildsensorausgangssignals auf die erforderliche Übertragungsbandbreite reduzieren. Da in der Bildverarbeitung eine enorme Masse - gerade bei hochauflösenden Bildsensoren - an Bilddaten anfällt, führt die Regionauslese, also die Darstellung von interessierenden Teilgebieten eines Bildes, zu signifikanten Leistungssteigerungen (Performance-Steigerungen) des Gesamtsystems, da die Übertragungsbandbreite bei steigendem Informationsgehalt, wie bei Hochgeschwindigkeits-Nachverfolgungs-Anwendungen, bzw. bei gleichbleibendem Informationsgehalt (wie z. B. bei einer Mehrfach-Regionsauslese) reduziert wird.

Existierende Bilderfassungssysteme, ähnlich zu dem das anhand der Fig. 7 beschrieben wurde, benötigen zur Beherrschung der oben genannten Anforderungen den externen Bildspeicher 708 sowie den intelligenten Auslesealgorithmus 710, welcher bewirkt, daß der Speicherinhalt mit der gewünschten Fenstermaske ausgelesen wird. Der Nachteil dieser Anordnung besteht darin, daß sich mittels der existierenden Bildsensoren die Bandbreite hierbei nicht reduzieren läßt, da aufgrund der vorgegebenen Sensorauslesearchitektur immer das gesamte Bild mit den Bereichen verschwindenden Informationsgehalts ausgelesen werden muß.

Ferner werden durch die Zwischenspeicherung des Bildes zusätzliche Latenzzeiten (Wartezeiten) erzeugt, die das Gesamtsystem träge machen, was ein Grund dafür ist, daß damit Hochgeschwindigkeitsanforderungen nicht erfüllt werden können.

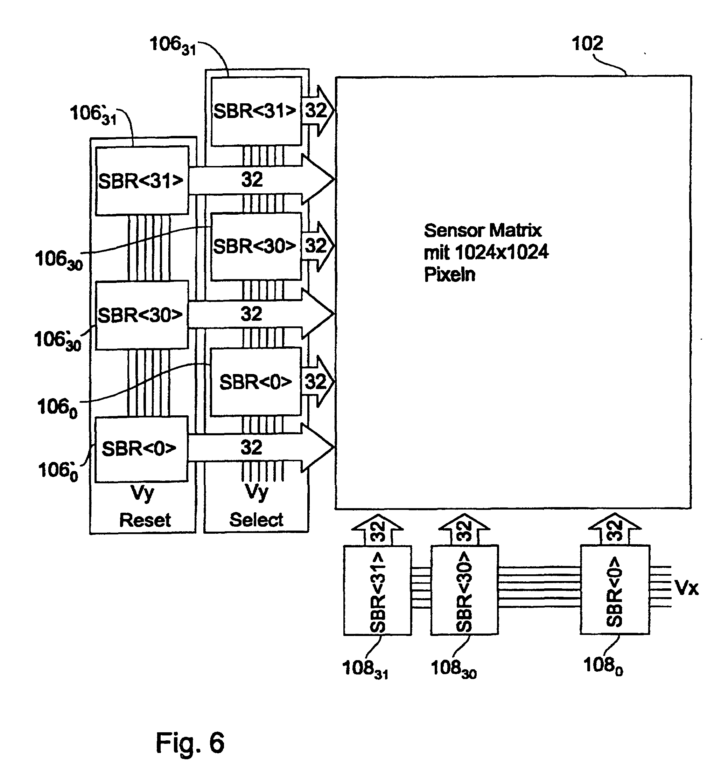

Sofern überhaupt möglich, ist die Realisierung einer der oben beschriebenen Funktionalitäten mit einem System, wie es anhand der Fig. 6 beschrieben wurde, nur mit erheblichem Kostenaufwand möglich.

Die EP 0 809 395 A2 beschreibt einen x-y-adressierbaren Pixelsensor, bei dem es möglich ist, die Bildausgabe auf einen Feldbereich des Pixelsensors zu begrenzen, und durch die resultierende Reduzierung von pro Bildausgabe auszugebenden Bildpixeln die Bildrate des Pixelsensors zu erhöhen. Bei einem ersten Ausführungsbeispiel besteht der Pixelsensor neben dem eigentlichen x-y-adressierbaren Pixelfeld aus zwei seriellen Schieberegistern zum Angeben der Zeilenadresse bzw. Spaltenadresse sowie aus einer Zeilen- bzw. Spaltenadreßsteuerung zur Steuerung der beiden seriellen Schieberegister. Die Adreßsteuerungen ermöglichen das Initialisieren der seriellen Schieberegister durch Schreiben einer digitalen Eins an eine beliebige Position innerhalb der Schieberegister. Von dieser Position an verschieben die Schieberegister die digitale Eins nur bis zu einer Position, bei der der definierte auszulesende Fensterbereich endet. Bei einem zweiten Ausführungsbeispiel wird beschrieben, daß der Pixelsensor neben dem eigentlichen x-y-adressierbaren Pixelfeld aus den beiden seriellen Schieberegistern und außerdem aus einem Zeilen- bzw. Spaltenfreigabeschalter besteht. Anders als bei dem ersten Ausführungsbeispiel durchlaufen die seriellen Schieberegister alle Zeilen bzw. alle Spalten des Pixelfeldes. Die beiden Freigabeschalter sind jedoch entworfen, um eine vorbestimmte Sequenz von digitalen Einsen zu laden, um jeweilige Zeilen und Spalten freizugeben, die dem auszugebenden Bildfeld entsprechen.

Die US 5841126 beschreibt einen Singlechip-Pixelsensor mit einem Pixelarray, das durch eine auf dem Chip befindliche Elektronik gesteuert wird, wobei eine Zeiteinteilungs- und Steuerungsschaltung die Zeilenelekronik und Spaltenelektronik des Pixelarrays steuert. Die Zeilen- und die Spalten-Elektronik bestehen jeweils aus Latch-Speichern, Zählern und Decodern. Die Zeiteinteilungs-und Steuerungsschaltung gibt über die Latch-Speicher einen Initialisierungswert in die Zähler ein, die die Anfangsposition eines auszulesenden Feldes definieren. Die Zähler gehen daraufhin ausgehend von dem Initialisierungswert benachbarte Werte der Reihe nach durch. Die werte in den Zählern stellen die Zeilen- bzw. Spaltenadresse des aktuell auszulesenden Pixels dar. Durch Abzählen der In- bzw. Dekrementierungen der Zähler und erneutes Einstellen des Wertes in den Zählern über die Latch-Speicher kann ein auszulesendes Feld ausgelesen werden, ähnlich wie dies bei dem ersten Ausführungsbeispiel des im vorhergehenden genannten Dokuments der Fall war.

Die DE 3744128 A1 beschreibt ein Verfahren und eine Schaltungsanordnung zur programmierten Ansteuerung von CCD- und Photodioden-Matrixarrays, um die Aufnahme von lediglich interessierenden Teilbereichen eines Bildes zu ermöglichen. Die Schaltungsanordnung umfaßt eine CPU sowie einen Speicher, wobei die CPU Kanalprogramme bestehend aus einer Reihe von Kanalblöcken in den Speicher schreibt. Ein DMA-Kontroller überträgt die Kanalblöcke aus dem Speicher in Kanalregister, in denen ein Kamerasteuerwort und eine Anzahl gespeichert wird, mit der das Kamerasteuerwort wiederholt übertragen werden soll. Dem in der Schaltungsanordnung umfaßten Halbleiterarray ist ein geeignetes Schaltwerk vorgeschaltet, um die Steuersignale an die jeweiligen Timinganforderungen des Halbleiterarrays anzupassen. Folglich wird bei der Schaltungsanordnung ein kompliziertes Schaltwerk verwendet, um eine programmierbare Auslesbarkeit des Halbleiterarrays zu ermöglichen.

Die US 5262871 beschreibt einen Bildsensor mit einem Pixelarray, der eine Vorrichtung zur direkten Adressierung einzelner Pixel und eine Vorrichtung zum selektiven Variieren der Anzahl von Pixel aufweist, die zu einem beliebigen Lesezyklus ausgelesen werden können. Auf diese Weise ermöglicht der Bildsensor das Einstellen von mehreren Auflösungen durch das Zusammenfassen von Pixeln zu Superpixeln und ermöglicht ferner das Abtasten des Bildes auf willkürliche Art und Weise, ähnlich dem Verhalten des menschlichen Auges beim Abtasten des Sichtfeldes. Bei dem Bildsensor wird die Auslesung der Pixel direkt vorgenommen.

Die EP 0527004 A1 beschreibt eine Bildaufzeichnungsvorrichtung mit einem Bildsensor, wie z.B. einem CCD- oder MOS-Typ-Array, einer Vertikalabtastungsschaltung einer Horizontalabtastungsschaltung, einer Ausgabeeinheit und einer Treiberschaltung. Die Auswahl eines auszulesenden Fensters entlang einer Zeile wird bei der Bildaufzeichnungsvorrichtung dadurch erreicht, daß die Treiberschaltung in der Horizontalabtastungsschaltung Anfangs- und Endsynchronisationspulse erzeugt, die angeben, von wo bis wo in einer Zeile das analoge Signal abgetastet werden soll. Zur Auswahl der Zeilen des Ausgabefensters, dessen Inhalt ausgegeben werden soll, ist die Vertikalabtastungsschaltung als Schieberegister gebildet, die eine Bitsequenz enthält, die angibt, welche Zeilen zur Ausgabe freigegeben sind. Die Treiberschaltung kann das Schieberegister der Vertikalabtastungsschaltung in einen geeigneten Anfangszustand versetzen, wobei die Freigabesequenz der Reihe nach aufeinanderfolgende Zeilen freigibt, bis das Ausgabefenster vollständig ausgelesen ist.

Ausgehend von diesem Stand der Technik liegt der vorliegenden Erfindung die Aufgabe zugrunde, ein verbessertes Verfahren und eine verbesserte Vorrichtung zum Auslesen von Bilddaten eines Teilbereichs eines Bildes zu schaffen, das auf einfache Art und Weise eine Übertragungsbandbreite eines Bilderfassungssystems bei der Auslesung von Teilbereichen eines Bildes reduziert, bei gleichzeitiger Reduzierung der Verzögerungs- bzw. Latenzzeiten.

Diese Aufgabe wird durch ein Verfahren gemäß Anspruch 1 und durch eine Vorrichtung gemäß Anspruch 5 gelöst.

Die vorliegende Erfindung schafft ein Verfahren und eine Vorrichtung welche unter Verwendung eines Schieberegisterbasierten Auslegekonzepts eine programmierbare Regionsauslese, also Auslesung von Bilddaten eines Teilbereichs eines Gesamtbildes ermöglichen. Gegenüber auf dem Markt erhältlichen CCD-Sensorsystemen, aber auch gegenüber existierenden CMOS-Bildsensoren hat diese Auslesearchitektur den Vorteil, daß sie wesentlich weniger Platz in der Bildmatrixperipherie benötigt, und ferner entstehen aufgrund des 100%igen Pipelinings (100%ige Parallelität) des Ladezyklusses der Fensterschemata bei der Sensorauslese keinerlei Verzögerungs- bzw. Latenzzeiten.

Ein weiterer Vorteil der vorliegenden Erfindung besteht darin, daß die gerade genannten beiden Vorteile bei den Decoder-basierten Lösungen (siehe Fig. 7) nie gleichzeitig erreicht werden können, da für die aktuelle Auslese und das Auslesefensterschema jeweils ein separater Decoder mit wesentlich höherem Platzbedarf als bei der erfindungsgemäßen, schieberegisterbasierten Lösung nötig ist.

Wiederum ein weiterer Vorteil besteht darin, daß bezüglich der Kriterien Latenzzeit und Platzbedarf das der vorliegenden Erfindung zugrunde liegende Auslesekonzept einen entscheidenden technischen Fortschritt gegenüber existierenden technischen Realisierungen darstellt.

Gemäß einem bevorzugten Ausführungsbeispiel sind die Bildsensorelemente in Zeilen und Spalten angeordnet, und die Aktivierungsmuster und Aktivierungssignale für die Bildsensorelemente der Zeilen und die Bildsensorelemente der Spalten werden getrennt gespeichert und angelegt. Ebenso umfassen in diesem Fall die Verzweigungsblöcke eine Mehrzahl von seriell verschalteten Zeilen-Verzweigungsblöcken und eine Mehrzahl von seriell verschalteten Spalten-Verzweigungsblöcken.

Gemäß einem weiteren bevorzugten Ausführungsbeispiel der vorliegenden Erfindung sind in den Verzweigungsblöcken, denen ein oder mehrere Bildsensorelemente zugeordnet sind, ein Teil des Aktivierungsmusters für die dem Verzweigungsblock zugeordneten Bildsensorelemente gespeichert. Am Eingang eines Verzweigungsblocks wird entweder von dem Eingang des Bildsensors oder von einem vorhergehenden Verzweigungsblock das Aktivierungssignal empfangen, und abhängig von dem in dem Verzweigungsblock gespeicherten Teil des Aktivierungsmusters wird bestimmt und gespeichert, ob die dem Verzweigungsblock zugeordneten Bildsensorelemente dem auszulesenden Teilbereich zugeordnet sind. Über eine Verzweigungslogikschaltung wird das Aktivierungssignal an die Bildsensorelemente des Verzweigungsblocks angelegt und an einen nachfolgenden Verzweigungsblock weitergegeben, falls die dem Verzweigungsblock zugeordneten Bildsensorelemente dem auszulesenden Teilbereich zugeordnet sind, oder das Aktivierungssignal wird an einen nachfolgenden Verzweigungsblock weitergeleitet, ohne dasselbe an die Bildsensorelemente des Verzweigungsblocks anzulegen, falls die dem Verzweigungsblock zugeordneten Bildsensorelemente dem auszulesenden Teilbereich nicht zugeordnet sind.

Mittels des Aktierungsmusters kann auch eine Mehrzahl von Teilbereichen festgelegt werden. Ferner kann das Aktivierungsmuster im wesentlichen parallel zu oder vor dem Aktivierungssignal gespeichert bzw. in einem Speicher abgelegt werden.

Gemäß einem weiteren Aspekt der vorliegenden Erfindung ist ein Bildsensor mit einer Mehrzahl von Bildsensorelementen vorgesehen, die durch ein Aktivierungssignal, das gemäß einem Taktsignal sequentiell an dieselben anlegbar ist, auslesbar sind. Dieser Bildsensor umfaßt ferner die erfindungsgemäße Vorrichtung zum Auslesen eines Teilbildes aus dem Bildsensor, die bevorzugterweise in einem Randbereich des Bildsensors integriert angeordnet ist.

Anhand der beiliegenden Zeichnungen werden nachfolgend bevorzugte Ausführungsbeispiele der vorliegenden Erfindung näher erläutert. Es zeigen:
- Fig. 1: eine schematische Darstellung eines Bildsensors dem die erfindungsgemäße Vorrichtung zugeordnet ist;
- Fig. 2: eine schematische Darstellung eines Zeilen-Verzweigungsblocks der erfindungsgemäßen Vorrichtung;
- Fig. 3: eine schematische Darstellung eines Spalten-Verzweigungsblocks der erfindungsgemäßen Vorrichtung;
- Fig. 4: einen Schaltplan der Verzweigungslogik für die in Fig. 2 und 3 dargestellten Verzweigungsblöcke;
- Fig. 5: die Zustandsübergangstabelle für die Logikschaltung aus Fig. 4;
- Fig. 6: ein Beispiel für eine Hardwarerealisierung einer Zeilen- und Spalten-basierten Auslese; und
- Fig. 7: einen herkömmlicher Bildsensor zur Auslese von Teilbilddaten.

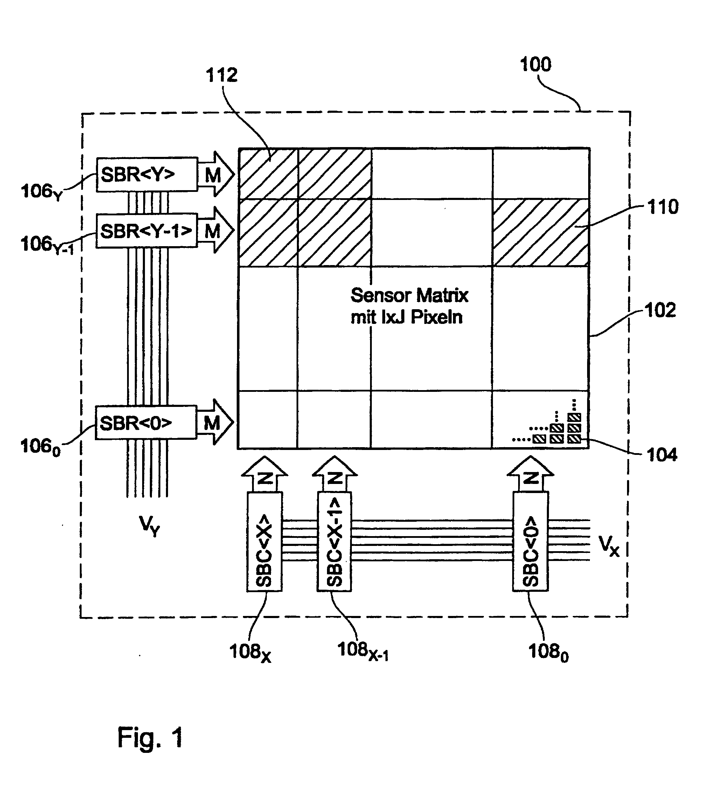

In Fig. 1 ist ein Bildsensor 100 schematisch dargestellt. Der Bildsensor 100 umfaßt eine Sensormatrix 102, die eine Mehrzahl von Bildsensorelementen 104 umfaßt, von denen in Fig. 1 lediglich einige wenige, der Übersichtlichkeit halber, dargestellt sind. Die Sensormatrix 102 ist im wesentlichen baugleich zu einer herkömmlichen Sensormatrix, wie sie beispielsweise anhand der Fig. 7 beschrieben wurde. Die Bildsensorelemente 104 (Pixel) der Sensormatrix 102 sind in I Zeilen und J Spalten angeordnet, wobei I, J ≥ 1 ist. Im Zusammenhang mit der vorliegenden Erfindung ist die Ansteuerung der einzelnen Bildsensorelemente 104 von Interesse, so daß aus Gründen der Übersichtlichkeit in Fig. 1 die Ausleseleitungen nicht dargestellt sind.

Bei dem in Fig. 1 gezeigten Ausführungsbeispiel sind eine Mehrzahl von Zeilen-Verzweigungsblöcken (SBR<0> bis SBR<Y>) 106₀ bis 106_{Y} angeordnet, die über eine Mehrzahl von Ansteuerleitungen V_{Y} seriell miteinander verschaltet sind. Wie durch die den einzelnen Zeilen-Verzweigungsblöcken 106₀ bis 106_{Y} zugeordneten Pfeile dargestellt ist, sind den jeweiligen Verzweigungsblöcken eine vorbestimmte Anzahl M Zeilen der Sensormatrix 102 zugeordnet. Ebenso sind eine Mehrzahl von Spalten-Verzweigungsblöcken (SBC<0> bis SBC<X>) 108₀ bis 108_{X} vorgesehen, die über Ansteuerleitungen V_{X} seriell miteinander verschaltet sind. Ähnlich wie bei den Zeilen-Verzweigungsblöcken 106₀ bis 106_{Y}, sind den Spalten-Verzweigungsblöcken 108₀ bis 108_{X} N Spalten der Sensormatrix 102 zugeordnet, wie dies durch die den einzelnen Spalten-Verzweigungsblöcken zugeordneten Pfeile dargestellt ist.

Für die Sensormatrix 102 mit I x J Bildsensorelementen 104 (Pixeln) gilt 1 ≤ M, N ≤ I, J, wobei bei der Sensormatrix 102 mit einer I x J Pixel Auflösung die Anzahl der Verzweigungsblöcke 106₀ bis 106_{Y} zwischen und 1 und _{Y} liegt, wobei _{Y} gleich I sein kann. Ebenso liegt die Anzahl der Spalten-Verzweigungsblöcke 108₀ bis 108_{X} zwischen 1 und _{X}, wobei _{X} gleich J sein kann.

Die erfindungsgemäße Vorrichtung und das erfindungsgemäße Verfahren ermöglichen anstelle der kompletten Auslesung der Sensormatrix 102 das selektive Auslesen von Teilregionen, wie beispielsweise den Teilbereichen 110 und 112, die in Fig. 1 schraffiert dargestellt sind.

Um sicherzustellen, daß nur die Bilddaten ausgelesen werden, die den jeweiligen Teilbereichen 110 und 112 zugeordnet sind, muß der Bildsensor 100 konfiguriert werden, um die interessierenden Bildsensorelemente 104 festzulegen, deren Daten ausgelesen werden sollen. Daher wird beim Konfigurieren des Bildsensors 100 für das in Fig. 1 gezeigte Beispiel festgelegt, daß über die Verzweigungsblöcke 106_{Y⁻¹}, und 106_{Y} sowie die Verzweigungsblöcke 108_{X-1} 108_{X} entsprechende Ansteuersignale zum Auslesen der entsprechenden Bildsensorelemente angelegt werden, wodurch Bilddaten ausgelesen werden, die dem Teilbild bzw. Teilbereich 112 entsprechen. Ebenso wird festgelegt, daß an die Bildelemente, die Daten für den Teilbereich 110 liefern entsprechende Aktivierungssignale angelegt werden, was durch eine entsprechende Speicherung des Aktivierungsmusters in den Verzweigungsblöcken 106_{Y-1} und 108₀ erfolgt. Für die übrigen Bildsensorelemente, die keinem der Teilbereiche 110, 112 zugeordnet sind, wird ein Anlegen eines Aktivierungssignals dadurch vermieden, daß in den entsprechend zugeordneten Verzweigungsblöcken bestimmt wird, daß diese Bildsensorelemente auszulassen sind, wobei dies über eine später beschriebene Verzweigungslogik erfolgt, die bewirkt, daß für den Fall, daß dem Verzweigungsblock zugeordnete Bildsensorelemente nicht angesteuert werden sollen, das Aktivierungssignal an diesen zum nächsten Verzweigungsblock vorbeigeleitet wird.

Gemäß der vorliegenden Erfindung wird das Auslesemuster (Signal "***skipping_pattern***") bevorzugterweise parallel zum eigentlichen Auslesevorgang in die Verzweigungsblöcke geladen. Bei einem anderen Ausführungsbeispiel können die Auslesemuster auch von vorab gespeichert werden.

Obwohl bei dem in Fig. 1 gezeigten Ausführungsbeispiel den Spalten-Verzweigungsblöcken jeweils eine gleiche Anzahl von Bildsensorelementspalten zugeordnet sind, und ebenfalls den Zeilen-Verzweigungsblöcken eine jeweils gleiche Anzahl von Bildsensorelementzeilen zugeordnet sind, ist festzuhalten, daß auch Konfigurationen möglich sind, bei denen den Spalten-Verzweigungsblöcken jeweils unterschiedlich viele Bildsensorelementspalten zugeordnet sind, und den Zeilen-Verzweigungsblöcken ebenfalls unterschiedlich viele Bildsensorelementzeilen zugeordnet sind. In Fig. 1 ist zu erkennen, daß durch einen Zeilen-Verzweigungsblock und einen Spalten-Verzweigungsblock ein Basis-Teilbereich festgelegt werden kann, im vorliegenden Fall der Bereich 110, wobei bei dem in Fig. 1 gezeigten Beispiel, bei dem alle Zeilen-Verzweigungsblöcke und alle Spalten-Verzweigungsblöcke einer gleichen Anzahl von Bildelementen zugeordnet sind, interessierende, auszulesende Bildbereiche durch einen oder mehrere benachbarte Basis-Teilbereiche festgelegt werden können.

Ferner ist darauf hinzuweisen, daß anstelle der in Fig. 1 gezeigten Festlegung von zwei Teilbereichen auch mehr oder weniger Teilbereiche mit unterschiedlichen Größen festgelegt werden können.

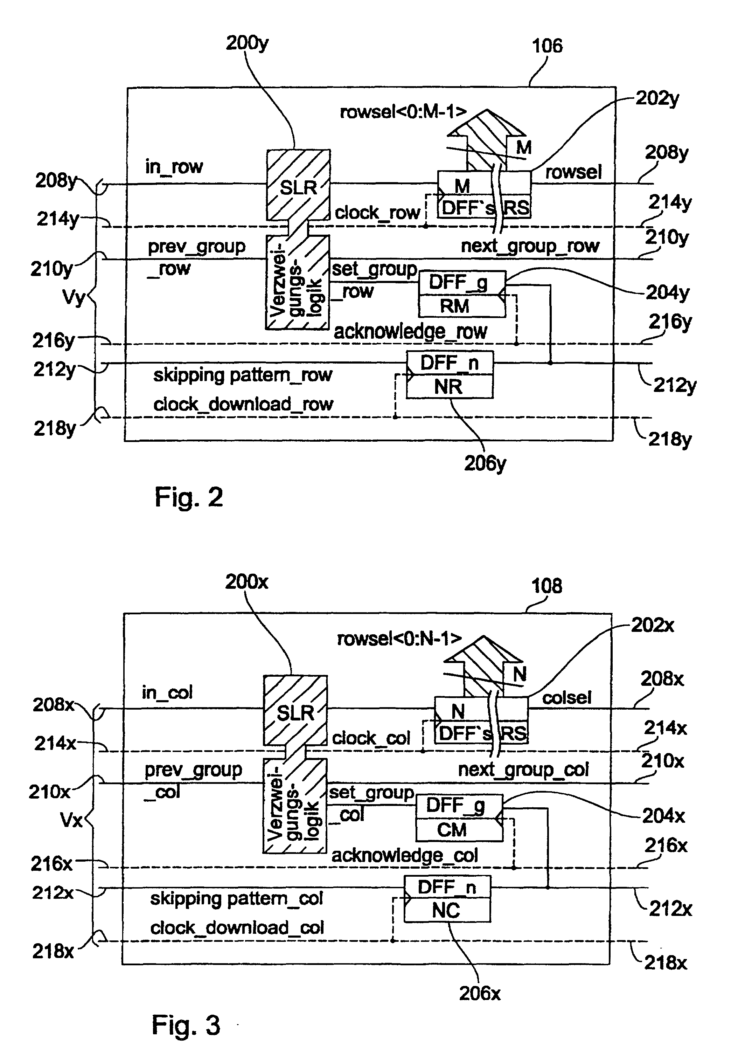

Anhand der Fig. 2 und 3 wird nachfolgend ein bevorzugtes Ausführungsbeispiel eines Zeilen-Verzweigungsblockes bzw. eines Spalten-Verzweigungsblockes näher beschrieben.

Alle Verzweigungsblöcke sind baugleich, und der in Fig. 2 gezeigte Verzweigungsblock 106 ist einer der Zeilen-Verzweigungsblöcke, die in Fig. 1 gezeigt sind. Dieser ist über die Ansteuerleitungen V_{Y} mit vorhergehenden und nachfolgenden Verzweigungsblöcken seriell verschaltet, oder falls er der erste Verzweigungsblock ist, empfängt dieser die Eingangssteuersignale und ist an seinem Ausgang mit dem nächsten Verzweigungsblock verbunden. Falls er der letzte der Verzweigungsblöcke, empfängt dieser an seinem Eingang die Steuersignale von den vorhergehenden Verzweigungsblöcken und ist an seinem Ausgang mit einem Abschlußelement verbunden. Der Verzweigungsblock 106 umfaßt eine Verzweigungslogik 200_{Y}, ein Adressregister 202_{Y} für die dem Verzweigungsblock 106 zugeordneten Zeilen, ein Zeilenspeicherregister (RM) 204_{Y} sowie ein Zeilenregister (NR) 206_{Y}.

Die Ansteuerleitungen V_{Y} umfassen sechs Einzelleitungen, drei Signalleitungen 208_{Y}, 210_{Y} und 212_{Y} und drei Aktivierungsleitungen 214_{Y}, 216_{Y} und 218_{Y}.

Die Taktleitung 214_{Y} dient zur Aktivierung des Zeilenadressregisters 202_{Y}, die Taktleitung 216_{Y} dient zur Aktivierung des Zeilenspeicherregisters 204_{Y}, und die Taktleitung 218_{Y} dient zur Aktivierung des Zeilenregisters 206_{Y}, wie dies durch die entsprechenden Verbindungen zwischen den jeweiligen Taktleitungen 214_{Y} bis 218_{Y} mit den jeweiligen Aktivierungseingängen der Register 202_{Y} bis 206_{Y}, die durch Flip-Flops gebildet sind, gezeigt ist. Die Datensignalleitung 208_{Y} ist mit einem Eingang der Verzweigungslogik 200_{Y} verbunden, die Datenleitung 210_{Y} ist mit einem weiteren Eingang der Verzweigungslogik verbunden, und die Datenleitung 212_{Y} ist mit einem Eingang des Zeilenregisters 206_{Y} verbunden. Der Ausgang des Zeilenregisters 206_{Y} ist mit einem Eingang des Zeilenspeicherregisters 204_{Y} verbunden, dessen Ausgang mit einem weiteren Eingang des Verzweigungslogik 200_{Y} verbunden ist. Die Verzweigungslogik 200_{Y} umfaßt einen ersten Ausgang, der mit einem Eingang des Zeilenadressregisters 202_{Y} verbunden ist, und einen zweiten Ausgang, der mit einer Ausgangsleitung des Verzweigungsblocks 106 verbunden ist. Abhängig von den an den Eingängen der Verzweigungsblocks 200_{Y} anliegenden Signalen werden entsprechende Ausgangssignale auf den zwei Ausgangsleitungen bereitgestellt. Am Ausgang des Verzweigungsblocks 106 sind wieder die sechs Ansteuerleitungen 208_{Y} bis 218_{Y} vorhanden.

Der in Fig. 3 gezeigte Spalten-Verzweigungsblock 108 ist vom Aufbau her im wesentlichen identisch zu dem in Fig. 2 beschriebenen Block 106, so daß eine erneute Beschreibung weggelassen wird. Zur Verdeutlichung, daß es sich hierbei um den Spalten-Verzweigungsblock handelt, sind für die Beschreibung der einzelnen Elemente die gleichen Bezugszeichen jedoch mit Index ₓ verwendet. Ferner handelt es sich bei den entsprechenden Registern 202_{X} bis 206_{X} um das Spaltenadressregister (CS), das Spaltenspeicherregister (CM) und das Zeilenregister (NC). Ferner sind die, im nachfolgenden noch näher zu beschreibenden Signale anstelle mit der Bezeichnung "row" (in Fig. 2) mit der Bezeichnung "col" (row = Zeile, col = columm = Spalte) versehen.

Die Funktionsweise der erfindungsgemäßen Vorrichtung wird nun anhand der in Fig. 2 und 3 dargestellten beispielhaften Verzweigungsblöcke näher erläutert. Die interessierende und auszulesende Region bzw. die interessierenden und auszulesenden Regionen 110, 112 (siehe Fig. 1) werden bei dem dargestellten Ausführungsbeispiel über die jeweiligen Spalten-Verzweigungsblöcke und Zeilen-Verzweigungsblöcke ausgewählt, wobei in den Blöcken 106 und 108 über jeweils das eine Zeilenregister (NR) 206_{Y} und das eine Spaltenregister (NC) 206_{X} festgelegt ist, ob die einem Verzweigungsblock zugeordneten Bildsensorelemente Bilddaten für den anzuzeigenden Teilbereich des Bildes erzeugen. Die Register NR, NC sind an der Bildmatrixperipherie angeordnet. An die Leitungen 212_{Y} und 212_{X} werden die Signale "***skipping_pattern_row***" und "***skipping_pattern_col***" angelegt. Der Begriff "***skipping_pattern***" bedeutet "Auslaßmuster" und durch dieses Signal wird festgelegt, welche der Spalten-Verzweigungsblöcke bzw. Zeilen-Verzweigungsblöcke dem Teilbereich zugeordnet sind. Mit anderen Worten wird durch das Signal "***skipping_pattern***" festgelegt, welche der Verzweigungsblöcke bewirken, daß ein Aktivierungssignal an die Bildsensorelemente dieses Verzweigungsblocks angelegt wird. Die Einstellung erfolgt in einem Konfigurationsschritt vor dem eigentlichen Auslesen oder, bevorzugter weise parallel bzw. im wesentlichen parallel zum anlegen des Aktivierungssignals (= getaktetes Durchleiten des Aktivierungssignals zu den einzelnen Verzweigungsblöcken). Das Signal "***skipping_pattern***" gibt für alle Verzweigungsblöcke an, ob diese den Teilbereichen zugeordnet sind oder nicht. Das Signal "***skipping_pattern_row***" und das Signal "***skipping_pattern_col***" werden mit den auf den Leitungen 218_{Y} und 218_{X} anliegenden Schiebetakten "***clock_download_row***" und "***clock_download_col***" in die Zeilenregister NR bzw. Spaltenregister NC der jeweiligen Verzweigungsblöcke hineingeschoben. Nachdem das Aktivierungs- oder Auslaßmuster in den einzelnen Verzweigungblöcken in den Zeilenregistern/-Spaltenregistern 206_{X}, 206_{Y} festgelegt ist, wird das in diesen Registern (Flip-Flops) gespeicherte Signal zu einem definierten Zeitpunkt in das Zeilenspeicherregister 204_{Y} bzw. das Spaltenspeicherregister 204_{X} übernommen, d. h. mit dem auf der Taktleitung 216_{Y}, 216_{X} anliegenden Taktsignal "***acknowledge*_*row***" bzw. "***acknowledge_col***" (Bestätige_Zeile, Bestätige_Spalte) werden die in den Zeilen- bzw. Spaltenregister gespeicherten Signale in das Zeilenspeicherregister bzw. Spaltenspeicherregister übernommen. Die Ein-Bit-Ausgangssignale der Speicher Flip-Flops RM und CM stellen diejenigen Informationen dar, die angeben, welcher Zeilen- bzw. Spaltenadressblock für eine Auslesung gültig ist (logische Eins) und welcher übersprungen wird (logische Null).

Der Bildsensor 100 (siehe Fig. 1) wird über das eine Zeilenadressregister (RS) 202_{Y} und eine Spaltenadressregister (CS) 202_{X} ansprechend auf den an der Taktleitung 214_{Y} bzw. 214_{X} anliegenden Takt "***clock_row***" bzw. "***clock_col***" ausgelesen. Dabei ist das Zeilenadressregister RS bzw. das Spaltenadressregister CS mit der Entscheidungs- oder Verzweigungslogik SLR bzw. SLC verbunden, welche in Abhängigkeit von den Ausgangssignalen des Zeilenspeicherregisters 204_{Y} bzw. des Spaltenspeicherregisters 204_{X} (Signale "***set_group_row***", "***set_group_col***") festlegt, welche Bildelemente bzw. Pixel ausgelesen werden und welche übersprungen werden.

Das Auslesen des Bildsensors 100 erfolgt durch Anlegen eines Aktivierungs- oder Start-Signals in Form einer logischen Eins an die Leitung 208_{Y} ("***in_row***") des ersten Verzweigungsblocks 106₀ (siehe Fig. 1) für die zeilenbasierte Adressierung, und in Form einer logischen Eins an die Leitung 208_{X} ("***in_col***") des ersten Spalten-Verzweigungsblock 108₀ (siehe Fig. 1) für die spaltenbasierte Adressierung. Die in Fig. 2 und 3 dargestellten Verzweigungsblöcke sind seriell verschaltet, wie dies in Fig. 1 dargestellt wurde. Jeder Verzweigungsblock adressiert einen Block von N bzw. M Bildelementen/Pixeln, wobei gilt 1 ≤ M, M ≤ I, J. Bei einer Matrix 102 (Fig. 1) mit I x J Pixeln Auflösung kann daher die Anzahl der Zeilen-Verzweigungsblöcke zwischen 1..I und die Anzahl der Spalten-Verzweigungsblöcke zwischen 1..J liegen.

Durch die Serienverschaltung der Verzweigungsblöcke ergeben sich die folgenden Signalidentitäten:
- "***in*_*row***_{X}" = "***rowsel***_{X-1}",
- "***in_col***_{Y}" = "***colsel***_{Y-1}",
- "***prev_group_row***_{X}" = "***next_group_row***_{X-1}", und
- "***prev_group_col***_{Y}" = "***next_group_col***_{Y-1}".

Die an den Signalleitungen 208_{Y} und 208_{X} anliegende logische Eins (Signale "***in_row***" bzw. "***in_col***") wird nun abhängig von dem Taktsignal "***clock_row***" bzw. "***clock_col***" durch die Zeilen- bzw. Spalten-Verzweigungsblöcke (SBR, SBC) getaktet. In Abhängigkeit des Zustandes der Signale "***set_group_row***" bzw. "***set_group_col***" wird das Signal "***in_row***" bzw. das Signal "***in_col***" an den Eingang des Zeilenadressregisters 202_{Y} bzw. des Spaltenadressregisters 202_{X} angelegt oder auf die Ausgangsleitung als Signal "***next_group_row***" bzw. "***next_group_col***" verzweigt.

Der in Serie folgende Verzweigungsblock SBR bzw. SBC (siehe Fig. 1) empfängt nun entweder eine logische Eins an seinem Eingang 208_{Y}/208_{X} ("***in_row***"/"***in_col***") oder an der Leitung 210_{Y}, 210_{X} ("***prev_group_row***"/"***prev_group_col***"). In diesem nachfolgenden Verzweigungsblock wiederholt sich nun die Abfrage- und Verzweigungsroutine in Abhängigkeit von dem im aktuellen Block gesetzten Statussignal "***set_group_row***" bzw. "***set_group_col***". Die Ausgangssignale der Entscheidungslogik 200_{Y}, 200_{X} werden gemäß dem Taktsignal "***clock_row***" bzw. "***clock_col***" an die Ausleseregister 202_{Y}, 202_{X} und die jeweils folgenden Verzweigungsblöcke über "***next_group_row***" bzw. "***next_group_col***" verzweigt. Dieser Vorgang wiederholt sich solange bis der Bildsensor 100 durch ein asynchrones Rücksetzsignal zurückgesetzt wird. Die Entscheidungslogik SLR bzw. SLC kann sowohl asynchron als auch synchron mit dem Takt "***clock_row***" und/oder "***clock_col***" arbeiten.

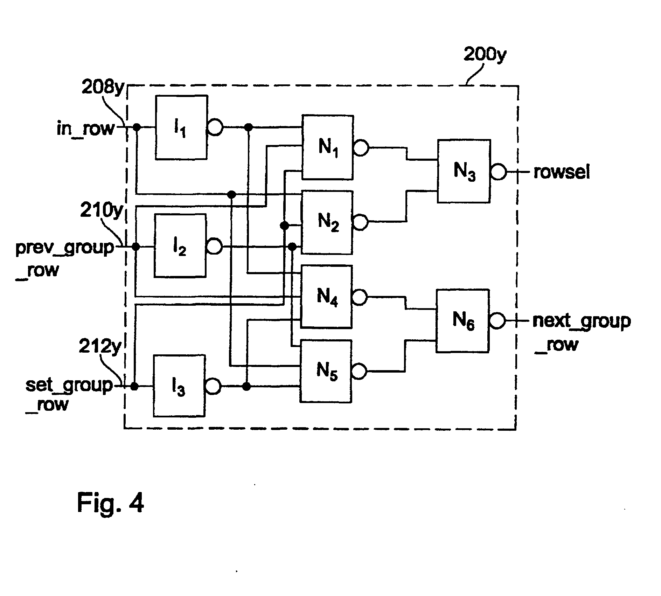

In Fig. 4 ist ein Ausführungsbeispiel der Verzweigungslogik 200_{Y} der Zeilen-Verzweigungsblöcke 106 gezeigt, wobei darauf hingewiesen wird, daß die Verzweigungslogik in den Spalten-Verzweigungsblöcken identisch aufgebaut sein kann. Wie bereits beschrieben wurde, empfängt die Verzweigungslogik 200_{Y} drei Eingangssignale, nämlich das Eingangssignal 208_{Y} ("***in_row***"), das Eingangssignal 210_{Y} ("***prev_group_row***") und das Eingangssignal 212_{Y} ("***set_group_row***"). Die Verzweigungslogik 200_{Y} umfaßt drei Invertierer I₁ bis I₃ sowie sechs NAND-Gatter N₁ bis N₆.

Der Invertierer I₁ empfängt das Eingangssignal 208_{Y} und gibt das invertierte Eingangssignal 208_{Y} an einen Eingang der NAND-Gatter N₁ und N₄. Das nicht-invertierte Eingangssignal 208_{Y} liegt an einem Eingang der NAND-Gatter N₂ und N₅ an. Das Eingangssignal 210_{Y} wird dem Invertierer I₂ zugeführt, dessen Ausgang an einem Eingang der NAND-Gatter N₂ und N₅ anliegt. Der nicht invertierte Eingangssignal 210_{Y} wird an einen Eingang der NAND-Gatter N₁ und N₄ angelegt. Das Eingangssignal 212_{Y} wird an den Invertierer I₃ angelegt, dessen Ausgangssignal an einem Eingang der NAND-Gatter N₄ und N₅ anliegt. Das nicht-invertierte Eingangssignal 212_{Y} liegt an Eingängen der NAND-Gatter N₁ und N₂ an.

Die Ausgangssignale der NAND-Gatter N₁ und N₂ liegen an den Eingängen des NAND-Gatters N₃ an, das an seinem Ausgang das Signal "***row_sel***" ausgibt. Die Ausgänge der NAND-Gatter N₄ und N₅ liegen an den Eingängen des NAND-Gatters N₆, das das Signal "***next_group_row***" ausgibt.

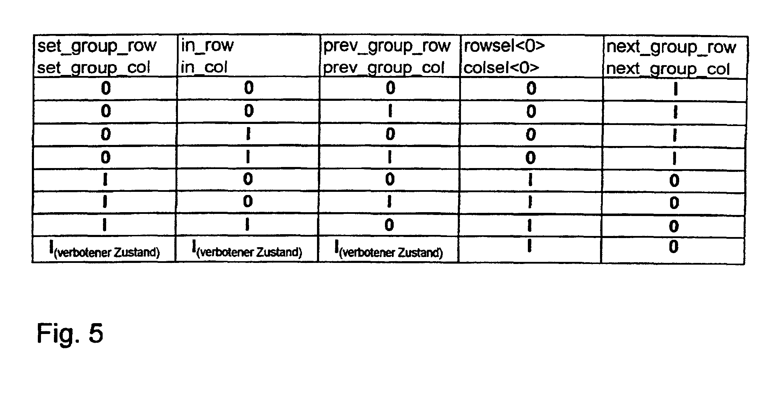

In Fig. 5 ist die Zustandsübergangstabelle für die in Fig. 4 dargestellte Verzweigungslogik, die, wie erwähnt, ebenso in den Spalten-Verzweigungsblöcken enthalten ist.

Die anhand der Fig. 4 beschriebene Verzweigungslogik kann beispielsweise in einem CMOS-Bildsensor implementiert sein, und, wie erwähnt, sind die Verzweigungsblöcke für Zeilenund Spalten-basierte Auslese identisch ausgelegt. Ebenso sind die Verzweigungslogiken identisch ausgelegt. Hinsichtlich der letzten Zeile der Zustandsübergangstabelle in Fig. 5 wird darauf hingewiesen, daß die dort angegebenen "verbotenen Zustände" durch eine entsprechende zeitliche Ansteuerung (timing) der Register RS, RM, NR sowie CS, CM, NC vermieden wird. Die in Fig. 4 gezeigte Verzweigungslogik ist beispielhaft für eine Zeilenverzweigungslogik, wobei eine Spaltenverzweigungslogik genauso aufgebaut sein kann, und die Eingangs- und Ausgangs-Signale entsprechen den im vorhergehenden genannten Spaltenauslesesignalen "***in*_*col***", "***prev_group_col***", "***set_group_col***", "***col_sel***" und "***next_group_col***".

Fig. 6 zeigt ein Beispiel für eine Hardwarerealisierung eines Bildsensors für eine Zeilen- und Spalten-basierte Auslese. Bei dieser Realisierung beträgt - wie zu erkennen ist - die Anzahl der Verzweigungsblöcke 32 SBR-Blöcke 106₀ bis 106₃₁ für die Zeilenauslese und 32 SBC-Blöcke 108₀ bis 108₃₁ für die Spaltenauslese. Die Sensormatrix 102 hat eine Auflösung von 1024 x 1024 Pixel und ein vier-kanaliges Ausleseschema für die Pixelausgangssignale. Die Anzahl der CS-Flip-Flops beträgt daher acht Flip-Flops pro SBC-Verzweigungsblock. Die Anzahl der RS-Flip-Flops beträgt 32 pro SBR-Verzweigungsblock.

Bei dieser Hardwarerealisierung wurde zusätzlich zu der Bank ("***SELECT***") für die Zeilenauswahl eine weitere Bank ("***RESET***") bestehend aus 32 SBR-Verzweigungsblöcken 106'₀ bis 106'₃₁ in vertikaler Zeilenrichtung implementiert, da eine SBR-Bank ("***SELECT***") für die zeilenweise Auslese der Pixel und eine weitere SBR-Bank ("***RESET***") für den zeilenweisen Reset der Pixel entsprechend dem "rolling-shutter"-Ausleseverfahren benötigt wird. Die 32 SBR-Verzweigungsblöcken 106'₀ bis 106'₃₁ der weiteren SBR-Bank ("***RESET***") sind denen der SBR-Bank ("***SELECT***") im wesentlichen ähnlich. Bei Anlegen eines Aktivierungssignals wird hier jedoch auswahlmäßig (abhängig von dem Auslesemuster - Signal "***skipping_pattern***") ein Reset-Signal an die zugeordneten Bildelemente angelegt.

Ein entscheidender Vorteil der erfindungsgemäßen Vorrichtung und des erfindungsgemäßen Verfahrens gegenüber bekannten Bildsensoreinheiten, die die Auslesung von Teilbildern ermöglichen, besteht darin, daß die Auslesemustersequenzen ("***skipping_pattern_row***" und "***skipping_pattern_col***") voll parallel zum eigentlichen Auslesevorgang ("***row_sel***" bzw. "***col_sel***") in die Verzweigungsblöcke geladen werden können. Dies kann aber auch wesentlich schneller aufgrund der unabhängigen Takte "***clock_row***", "***clock_download_row***" und "***acknowledge_row***" sowie "***clock_col***", "***clock_download_col***" und "***acknowledge_col***" geschehen. Daraus folgt als weitere Konsequenz, daß die Aufteilung der Verzweigungsblöcke SBR bzw. SBC Zeilen- bzw. Spalten-weise geschehen kann, d. h. die Register RS und CS können auf das Minimum von einem FlipFlop reduziert werden. Darüberhinaus können beliebig viele Zeilen bzw. Spalten unabhängig voneinander im jeweiligen Verzweigungsblock SBR bzw. SBC zusammengefaßt werden.

Das gemäß der vorliegenden Erfindung definierte Bildsensorausleseschema besitzt ein Maximum an Flexibilität und ist daher für jede beliebige Matrixauflösung implementierbar. Im Gegensatz hierzu besitzen die bekannten Decoderarchitekturen immer eine gewisse Redundanz, sofern die Matrixaufiösung keiner Zweier-Potenz entspricht. Außerdem benötigen herkömmliche Decodernetzwerke wesentlich mehr Platz. Das hier vorgestellte Konzept des Sensorausleseschemas ist dagegen immer optimal auf die jeweilige Matrixauflösung angepaßt.

Bei minimalem Platzaufwand liegt der Gatteraufwand der Verknüpfungslogik in der Größenordnung von 6 bis 10 und der der Schieberegister-Flip-Flops in der Größenordnung von 10 bis 12. Pro Verzweigungsblock SBR, SBC besteht also maximal ein Gatteraufwand von 16 bis 22. Im Gegensatz zu dem Gitteraufwand eines herkömmlichen Decodernetzwerks, welcher mehrere hundert Gatter - abhängig von der Sensorauflösung - beträgt, bedeutet dies einen entscheidenden Platzgewinn.

Sofern versucht wird, mit herkömmlichen Decodernetzwerken darüberhinaus eine ähnlich gute Parallelität (Pipelining-Performance) zu erreichen wie beim erfindungsgemäßen Konzept der Verzweigungsblöcke, so benötigt man Zwischenspeicher (Latch-Register), die alleine schon den Platzbedarf eines Verzweigungsblockes besitzen. Verzweigungsblock-basierte Sensorauslesearchitekturen ermöglichen daher den vollständigen Verzicht auf Decodernetzwerke bei einer identischen Parallelität (Pipelining-Performance).

## Patentansprüche

1. Verfahren zum Auslesen von Bilddaten eines Teilbereichs (110, 112) eines Bildes, das durch einen Bildsensor (100) erfaßt wird, wobei der Bildsensor (100) eine Mehrzahl von Bildsensorelementen (104) umfaßt, die durch ein Aktivierungssignal (***row_sel, col*_*sel***), das gemäß einem vorbestimmten Taktsignal (***clock_row, clock_col***) mittels Verzweigungsblöcken (106, 108) an die Bildsensorelemente (104) angelegt wird, auslesbar sind, mit folgenden Schritten:
Speichern eines Aktivierungsmusters, das die Bildsensorelemente festlegt, die die Bilddaten für den Teilbereich (110, 112) ausgeben; und
Anlegen des Aktivierungssignals an die Bildsensorelemente des Bildsensors (100), abhängig von dem gespeicherten Aktivierungsmuster,
**dadurch gekennzeichnet, daß**
das Aktivierungsmuster im wesentlichen gleichzeitig mit dem Aktivierungssignal in die Verzweigungsblöcke eingespeichert wird.

2. Verfahren nach Anspruch 1, bei dem die Bildsensorelemente (104) in Zeilen und Spalten angeordnet sind, und bei dem das Aktivierungsmuster für die Bildsensorelemente der Zeilen und die Bildsensorelemente der Spalten getrennt gespeichert und angelegt wird, und das Aktivierungssignal für die Bildsensorelemente der Zeilen und die Bildsensorelemente der Spalten getrennt gespeichert und angelegt wird.

3. Verfahren nach Anspruch 1 oder 2, bei dem der Bildsensor (100) eine Mehrzahl von Verzweigungsblöcken (106, 108) umfaßt, wobei jedem der Verzweigungsblöcke eines oder mehrere Bildsensorelemente zugeordnet sind, wobei in den Verzweigungsblöcken (104, 106) ein Teil des Aktivierungsmusters für die dem Verzweigungsblock zugeordneten Bildsensorelemente gespeichert ist, und bei dem der Schritt des Anlegens für einen Verzweigungsblock folgende Teilschritte aufweist:
Empfangen des Aktivierungssignals von einem Eingang des Bildsensors (100) oder einem vorhergehenden Verzweigungsblock;
abhängig von dem in dem Verzweigungsblock (106, 108) gespeicherten Teil des Aktivierungsmusters, Bestimmen, ob die dem Verzweigungsblock (106, 108) zugeordneten Bildsensorelemente dem auszulesenden Teilbereich (110, 112) zugeordnet sind;
falls die dem Verzweigungsblock zugeordneten Bildsensorelemente dem auszulesenden Teilbereich zugeordnet sind, Anlegen des Aktivierungssignals an die Bildsensorelemente des Verzweigungsblocks und Weiterleiten des Aktivierungssignals an einen nachfolgenden Verzweigungsblock; und
falls die dem Verzweigungsblock zugeordneten Bildsensorelemente dem auszulesenden Teilbereich (110, 112) nicht zugeordnet sind, Weiterleiten des Aktivierungssignals an einen nachfolgenden Verzweigungsblock ohne dasselbe an die Bildsensorelemente des Verzweigungsblocks anzulegen.

4. Verfahren nach einem der Ansprüche 1 bis 3, bei dem das Aktivierungsmuster eine Mehrzahl von Teilbereichen (110, 142) festlegt.

5. Vorrichtung zum Auslesen von Bilddaten eines Teilbereichs (110, 112) eines Bildes, das ein Bildsensor (100) erfaßt, wobei der Bildsensor (100) eine Mehrzahl von Bildsensorelementen (104) umfaßt, die durch ein Aktivierungssignal (***row_sel, col_sel***), das gemäß einem vorbestimmten Taktsignal (***clock_row, clock_col***) *se*quentiell an dieselben anlegbar ist, auslesbar sind, wobei die Bildsensorelemente, die die Bilddaten für den Teilbereich ausgeben, durch ein Aktivierungsmuster festlegbar sind, mit
einer Mehrzahl von seriell verschalteten Verzweigungsblöcken (106, 108), die das Aktivierungsmuster speichern, wobei jeder der Verzweigungsblöcke (106, 108) abhängig von dem Aktivierungsmuster das empfangene Aktivierungssignal an ein oder mehrere Bildsensorelemente, die einem Verzweigungsblock (106, 108) zugeordnet sind, anlegt oder an einen nachfolgenden Verzweigungsblock oder ein Abschlußelement weitergibt,
**dadurch gekennzeichnet, daß** das Aktivierungsmuster im wesentlichen gleichzeitig mit dem Aktivierungssignal in die Verzweigungsblöcke (106, 108) eingespeichert wird.

6. Vorrichtung nach Anspruch 5, bei dem die Bildsensorelemente (104) in Zeilen und Spalten angeordnet sind, und die Mehrzahl von Verzweigungsblöcken (106, 108) eine Mehrzahl von seriell verschalteten Zeilen-Verzweigungsblöcken (106₀ bis 106_{X}) und eine Mehrzahl von seriell verschalteten Spalten-Verzweigungsblöcken (108₀ bis 108_{X}) umfaßt.

7. Vorrichtung nach Anspruch 5 oder 6, bei der in den Verzweigungsblöcken (106, 108) ein Teil des Aktivierungsmusters für die dem Verzweigungsblock zugeordneten Bildsensorelemente gespeichert ist, wobei ein Verzweigungsblock folgende Merkmale aufweist:
einen Eingang (208_{Y}, 208_{X}), an dem das Aktivierungssignal von einem Eingang des Bildsensors (100) oder einem vorhergehenden Verzweigungsblock anliegt;
einen Speicher (206_{Y}, 206_{X}), in dem abhängig von dem in dem Verzweigungsblock (106, 108) gespeicherten Teil des Aktivierungsmusters gespeichert ist, ob die dem Verzweigungsblock zugeordneten Bildsensorelemente dem auszulesenden Teilbereich zugeordnet sind; und
eine Verzweigungslogik (200_{Y}, 200_{X}), die, falls die dem Verzweigungsblock zugeordneten Bildsensorelemente dem auszulesenden Teilbereich zugeordnet sind, das Aktivierungssignal an die Bildsensorelemente des Verzweigungsblocks und an einen nachfolgenden Verzweigungsblock anlegt, oder, falls die dem Verzweigungsblock zugeordneten Bildsensorelemente dem auszulesenden Teilbereich nicht zugeordnet sind, das Aktivierungssignal an einen nachfolgenden Verzweigungsblock ohne dasselbe an die Bildsensorelemente des Verzweigungsblocks anzulegen weiterleitet.

8. Vorrichtung nach einem der Ansprüche 5 bis 7, bei dem das Aktivierungsmuster eine Mehrzahl von Teilbereichen (110, 112) festlegt.

9. Bildsensor (100) mit einer Mehrzahl von Bildsensorelementen (104), der durch ein Aktivierungssignal, das gemäß einem Taktsignal (***clock_row, clock_col***) sequentiell an dieselben anlegbar ist, auslesbar ist, mit:
einer,Vorrichtung gemäß einem der Ansprüche 5 bis 8 zum Auslesen eines Teilbildes aus dem Bildsensor (100).

10. Bildsensor nach Anspruch 8, bei dem die Bildsensorelemente (104) in Zeilen und Spalten angeordnet sind, wobei die Vorrichtung zum Auslesen in einem Randbereich des Bildsensors (100) integriert angeordnet ist.

## Claims

1. A method of reading out image data of a sub-range (110, 112) of an image captured by an image sensor (100), the image sensor (100) including a plurality of image sensor elements (104) which can be read out by an activation signal (***row_sel, col*_*sel***) applied to the image sensor elements (104) according to a predetermined clock signal (***clock_row, clock_col***) by means of branch blocks (106, 108), comprising the following steps:
storing an activation pattern determining the image sensor elements outputting the image data for the sub-range (110, 112); and
applying the activation signal to the image sensor elements of the image sensor (100) depending on the activation pattern stored,
**characterized in that**
the activation pattern is stored in the branch blocks substantially simultaneously to the activation signal.

2. The method according to claim 1, wherein the image sensor elements (104) are arranged in rows and columns and wherein the activation pattern for the image sensor elements of the rows and the image sensor elements of the columns is stored and applied separately and the activation signal for the image sensor elements of the rows and the image sensor elements of the columns is stored and applied separately.

3. The method according to claims 1 or 2, wherein the image sensor (100) includes a plurality of branch blocks (106, 108), wherein one or several image sensor elements are associated with each of the branch blocks, wherein a part of the activation pattern for the image sensor elements associated with the branch block is stored in the branch blocks (104, 106) and wherein the step of applying for a branch block comprises the following sub-steps:
receiving the activation signal from an input of the image sensor (100) or a previous branch block;
depending on the part of the activation pattern stored in the branch block (106, 108), determining whether the image sensor elements associated with the branch block (106, 108) are associated with the sub-range (110, 112) to be read out;
if the image sensor elements associated with the branch block are associated with the sub-range to be read out, applying the activation signal to the image sensor elements of the branch block and passing on the activation signal to a subsequent branch block; and
if the image sensor elements associated with the branch block are not associated with the sub-range (110, 112) to be read out, passing on the activation signal to a subsequent branch block without applying same to the image sensor elements of the branch block.

4. The method according to one of claims 1 to 3, wherein the activation pattern determines a plurality of subranges (110, 112).

5. A device for reading out image data of a sub-range (110, 112) of an image captured by an image sensor (100), the image sensor (100) including a plurality of image sensor elements (104) which can be read out by an activation signal (***row_sel, col_sel***) sequentially appliable to same according to a predetermined clock signal (***clock_row, clock*_*col***), wherein the image sensor elements outputting the image data for the sub-range can be determined by means of an activation pattern, comprising:
a plurality of branch blocks (106, 108) connected in series storing the activation pattern, wherein each of the branch blocks (106, 108), depending on the activation pattern, applies the activation signal received to one or several image sensor elements associated with a branch block (106, 108) or passes same on to a subsequent branch block or a terminating element,
**characterized in that** the activation pattern is stored in the branch blocks (106, 108) substantially simultaneously to the activation signal.

6. The device according to claim 5, wherein the image sensor elements (104) are arranged in rows and columns and the plurality of branch blocks (106, 108) includes a plurality of row branch blocks (106₀ to 106_{X}) connected in series and a plurality of column branch blocks (108₀ to 108_{X}) connected in series.

7. The device according to claims 5 or 6, wherein a part of the activation pattern for the image sensor elements associated with the branch block is stored in the branch blocks (106, 108), a branch block comprising:
an input (208_{Y}, 208_{X}) at which the activation signal from an input of the image sensor (100) or a previous branch block is present;
a memory (206_{Y}, 206_{X}) in which, depending on the part of the activation pattern stored in the branch block (106, 108), it is stored whether the image sensor elements associated with the branch block are associated with the sub-range to be read out; and
branch logic (200_{Y}, 200_{X}) applying, if the image sensor elements associated with the branch block are associated with the sub-range to be read out, the activation signal to the image sensor elements of the branch block and to a subsequent branch block, or, if the image sensor elements associated with the branch block are not associated with the sub-range to be read out, passing on the activation signal to a subsequent branch block without applying same to the image sensor elements of the branch block.

8. The device according to one of claims 5 to 7, wherein the activation pattern determines a plurality of subranges (110, 112).

9. An image sensor (100) having a plurality of image sensor elements (104), which can be read out by an activation signal sequentially appliable to same according to a clock signal (***clock_row***, ***clock_col***), comprising:
a device according to one of claims 5 to 8 for reading out a sub-image from the image sensor (100).

10. The image sensor according to claim 8, wherein the image sensor elements (104) are arranged in rows and columns, wherein the device for reading out is integrally arranged in a marginal region of the image sensor (100).

## Revendications

1. Procédé d'extraction de données d'images d'une zone partielle (110, 112) d'une image qui est captée par un capteur d'images (100), le capteur d'images (100) comportant une pluralité d'éléments de capteur d'images (104) pouvant être extraits à l'aide d'un signal d'activation (*row_sel, col_sel*) appliqué aux éléments de capteur d'images (104) selon un signal d'horloge prédéterminé (*clock_row, clock_col*) à l'aide de blocs de dérivation (106, 108), aux étapes suivantes consistant à :
mémoriser un modèle d'activation qui détermine les éléments de capteur d'images qui sortent les données d'image de la zone partielle (110, 112) ; et
appliquer le signal d'activation aux éléments du capteur d'images (100) en fonction du modèle d'activation mémorisé,
**caractérisé par le fait que**
le modèle d'activation est mémorisé dans les blocs de dérivation sensiblement en même temps que le signal d'activation.

2. Procédé selon la revendication 1, dans lequel les éléments de capteur d'images (104) sont disposés en lignes et en colonnes et dans lequel le modèle d'activation pour les éléments de capteur d'images des lignes et les éléments de capteur d'images des colonnes sont mémorisés et appliqués séparément et le signal d'activation pour les éléments de capteur d'images des lignes et les éléments de capteur d'images des colonnes sont mémorisés et appliqués séparément.

3. Procédé selon la revendication 1 ou 2, dans lequel le capteur d'images (100) comprend une pluralité de blocs de dérivation (106, 108), à chacun des blocs de dérivation étant associés un ou plusieurs éléments de capteur d'images, dans les blocs de dérivation (104, 106) étant mémorisée une partie du modèle d'activation pour les éléments de capteur d'images associés au bloc de dérivation et dans lequel l'étape d'application pour un bloc de dérivation présente les étapes partielles suivantes consistant à :
recevoir le signal d'activation d'une entrée du capteur d'images (100) ou d'un bloc de dérivation précédent ;
en fonction de la partie du modèle d'activation mémorisée dans le bloc de dérivation (106, 108), déterminer si les éléments de capteur d'images associés au bloc de dérivation (106, 108) sont associés à la zone partielle (110, 112) qui doit être extraite;
si les éléments de capteur d'images associés au bloc de dérivation sont associés à la zone partielle à extraire, appliquer le signal d'activation aux éléments de capteur d'images du bloc de dérivation et transmettre le signal d'activation à un bloc de dérivation suivant ; et
si les éléments de capteur d'images associés au bloc de dérivation ne sont pas associés à la zone partielle (110, 112) à extraire, transmettre le signal d'activation à un bloc de dérivation suivant, sans appliquer celui-ci aux éléments de capteur d'images du bloc de dérivation.

4. Procédé selon l'une des revendications 1 à 3, dans lequel le modèle d'activation détermine une pluralité de zones partielles (110, 112).

5. Dispositif d'extraction de données d'images d'une zone partielle (110, 112) d'une image que capte un capteur d'images (100), le capteur d'images (100) comportant une pluralité d'éléments de capteur d'images (104) pouvant être extraits à l'aide d'un signal d'activation (*row_sel, col_sel*) qui peut être appliqué selon un signal d'horloge prédéterminé (*clock_row, clock*_*col*) en séquence à ces derniers, les éléments de capteur d'images qui sortent les données d'image de la zone partielle pouvant être déterminés par un modèle d'activation, avec
une pluralité de blocs de dérivation connectés en série (106, 108), qui mémorisent le modèle d'activation, chacun des blocs de dérivation (106, 108) appliquant, en fonction du modèle d'activation, le signal d'activation reçu à un ou plusieurs éléments de capteur d'image associés à un bloc de dérivation (106, 108) ou transmettant celui-ci à un bloc de dérivation suivant ou à un élément de terminaison,
**caractérisé par le fait que** le modèle d'activation est mémorisé dans les blocs de dérivation (106, 108) sensiblement en même temps que le signal d'activation.

6. Dispositif selon la revendication 5, dans lequel les éléments de capteur d'images (104) sont disposés en lignes et en colonnes et la pluralité de blocs de dérivation (106, 108) comprend une pluralité de blocs de dérivation de ligne connectés en série (106₀ à 106ₓ) et une pluralité de blocs de dérivation de colonne connectés en série (108₀ à 108ₓ).

7. Dispositif selon la revendication 5 ou 6, dans lequel est mémorisée, dans les blocs de dérivation (106, 108), une partie du modèle d'activation pour les éléments de capteur d'images associés au bloc de dérivation, un bloc de dérivation présentant les caractéristiques suivantes:
une entrée (208_{y}, 208ₓ) à laquelle est présent le signal d'activation d'une entrée du capteur d'images (100) ou d'un bloc de dérivation précédent ;
une mémoire (206_{y}, 206ₓ), dans laquelle est mémorisé, en fonction de la partie du modèle d'activation mémorisée dans le bloc de dérivation (106, 108), si les éléments de capteur d'images associés au bloc de dérivation sont associés à la zone partielle à extraire ; et
une logique de dérivation (200_{y}, 200ₓ) qui, si les éléments de capteur d'images associés au bloc de dérivation sont associés à la zone partielle à extraire, applique le signal d'activation aux éléments de capteur d'images du bloc de dérivation et à un bloc de dérivation suivant ou, si les éléments de capteur d'images associés au bloc de dérivation ne sont pas associés à la zone partielle à extraire, transmet le signal d'activation à un bloc de dérivation suivant, sans appliquer ce dernier aux éléments de capteur d'images du bloc de dérivation.

8. Dispositif selon l'une des revendications 5 à 7, dans lequel le modèle d'activation détermine une pluralité de zones partielles (110, 112).

9. Capteur d'images (100) avec une pluralité d'éléments de capteur d'images (104) pouvant être extraits à l'aide d'un signal d'activation qui peut être appliqué en séquence à ces derniers selon un signal d'horloge (*clock_row, clock_col*), avec :
un dispositif, selon l'une des revendications 5 à 8, d'extraction d'une image partielle du capteur d'images (100).

10. Capteur d'images selon la revendication 8, dans lequel les éléments de capteur d'images (104) sont disposés en lignes et en colonnes, le dispositif d'extraction étant disposé intégré dans une zone marginale du capteur d'images (100).
